# EUROPEAN PATENT SPECIFICATION

(11) **EP 3 018 972 B1**
(45) Date of publication and mention of the grant of the patent: **06.05.2020**
(21) Application number: 13881089.0
(22) Date of filing: 21.08.2013
(51) Int. Cl.: H01Q 1/22, H01Q 1/48, H01Q 1/52, H01R 13/6594, H01R 35/04

(54) **GROUNDING STRUCTURE AND ROTARY WIRELESS NETWORK CARD**
ERDUNGSSTRUKTUR UND ROTIERENDE DRAHTLOSNETZWERKKARTE
STRUCTURE DE MISE À LA MASSE ET CARTE RÉSEAU SANS FIL TOURNANTE

(30) Priority: 01.07.2013 CN 201310272323
(43) Date of publication of application: 11.05.2016
(73) Proprietor: ZTE Corporation, Shenzhen, Guangdong 518057 (CN)
(72) Inventor: LIU, Yang, Shenzhen Guangdong 518057 (CN); SHU, Chaofan, Shenzhen Guangdong 518057 (CN)
(74) Representative: Herzog IP Patentanwalts GmbH
(86) International application number: PCT/CN2013/081939
(87) International publication number: WO 2014/161260

(56) References cited:
- WO-A1-2012/097561
- CN-A- 101 674 674
- CN-A- 102 185 233
- CN-A- 102 185 233
- CN-A- 102 646 907
- CN-A- 102 646 907
- CN-Y- 201 323 599
- CN-Y- 201 348 880

## Description

### TECHNICAL FIELD

The present disclosure relates to a wireless terminal product technology, and in particular to a grounding structure and a rotary wireless network card.

### BACKGROUND

Along with the development of a wireless broadband access technology and industry, services with a wireless network card which may help a user to access a wireless network anytime anywhere as an important part in the wireless network are more and more required. At present, a user not only makes requirements on performance of a wireless network card, but also has higher and higher requirements on its appearance.

At present, most of mainstream wireless network cards adopt Universal Serial Bus (USB) interfaces, and may be divided into direct plug-in wireless network cards and rotary wireless network cards. A direct plug-in wireless network card usually adopts a cap design to avoid a USB interface being exposed and easily damaged, but a cap is easily lost; and a rotating shaft is arranged in a rotary wireless network card, so that a USB interface is rotated into a body of the wireless network card when the wireless network card is not used, and the USB interface is unlikely to be damaged during storage. However, a metal dome fixed in a hot melting manner in a structural part of the rotary wireless network card is required to be kept at a certain upwarping angle to ensure good connection between the metal dome and a metal shielding casing of a main board, but the upwarping angle of the metal dome may not be ensured to be completely consistent in a manufacturing process, so that the rotary wireless network card is low in consistency, and low-frequency antenna performance of the rotary wireless network card is poorer than that of a direct plug-in wireless network card.

In order to solve the problem of poorer low-frequency antenna performance of a rotary wireless network card, manners of increasing a diameter of a grounding wire, additionally arranging a connecting wire between a main board and a USB interface, spraying a conductive paint onto a structural part of the wireless network card, adhering conductive foam, increasing a width of a metal dome, and the like are usually adopted in the related art, and however, each manner may greatly increase cost of the wireless network card.

WO 2012/097561 discloses an anti-interference structure for wireless signals and a portable mobile terminal, relates to the electronics technology field, and solves the technical problem of the less reliability of capability of the anti-interference for the wireless signals in the prior art. The wireless signal anti-interference structure includes a filter apparatus electrically connected with a suspended conductor, the filter apparatus is respectively electronically connected with the conductor and ground, and the filter apparatus is used for filtering the wireless signals on the conductor. The portable mobile terminal includes a casing and the wireless signal anti-interference structure. This structure reduce interference of the wireless signals received by the suspended conductor to antenna.

CN 102 185 233 discloses a rotatable USB (Universal Serial Bus) interface equipment. The equipment is characterized in that a USB module can rotate relative to a PCB (printed circuit board) by a spindle, wherein a first earth wire in the USB module is connected with the spindle and the spindle is connected with a conducting medium layer, thus a first grounded circuit of the USB module is formed. An insulating medium layer is arranged between a grounded layer on the PCB and the conducting medium layer and insulates the first grounded circuit from a second grounded circuit formed by the ground layer of the PCB. Since the insulating medium layer isolates the grounded circuits of the PCB and the USB module, an open-circuit voltage can be formed for maintaining the stable voltage difference, so that the whole equipment can obtain stable ground signaling, thereby improving the grounding performance and transmitting and receiving performance of the equipment.

According to CN 102 646 907 A, USB interface and terminal are described.

According to CN 201 348 880 Y, a rotary USB data card is described.

### SUMMARY

In view of this, a main purpose of an embodiment of the present disclosure is to provide a grounding structure and a rotary wireless network card, which may solve the problem of poor consistency of a rotary wireless network card and effectively improve sensitivity of a low-frequency antenna.

The features of the device according to the present invention are defined in the independent claim, and the preferable features according to the present invention are defined in the dependent claims.

Compared with the related art, the grounding structure and rotary wireless network card provided by the embodiment of the present disclosure have the advantages that the ground on the main board of the wireless access terminal may form a capacitive coupling effect with the metal dome to form a new loop by changing a grounding manner for the main board of the wireless access terminal, so that an interference loop effect formed by a radio frequency current flowing through the main board may be effectively eliminated, the problem of poor low-frequency performance of a built-in antenna is effectively solved, and sensitivity of a low-frequency antenna is improved.

### BRIEF DESCRIPTION OF THE DRAWINGS

Fig. 1 is a schematic diagram of a grounding structure according to a first example, not forming part of the invention. and
Fig. 2 is a schematic diagram of a grounding structure according to a first embodiment of the present disclosure.

### DETAILED DESCRIPTION

A basic thought of an embodiment of the present disclosure is: a ground on a main board and a metal dome form a capacitive coupling effect to form a new loop in a coupling connection manner by changing a grounding manner for the main board, so that an interference loop effect formed by a radio frequency current flowing through the main board is effectively eliminated, and the problem of poor low-frequency performance of a built-in antenna is effectively solved.

The present disclosure is further described below with reference to the drawings and specific embodiments in detail.

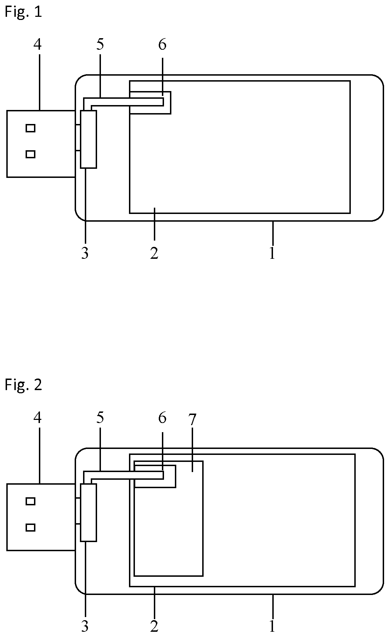

Fig. 1 is a schematic diagram of a grounding structure according to a first example, not forming part of the invention. As shown in Fig. 1, the example is applied to a rotary wireless network card, wherein the wireless network card includes: a structural part 1, as well as a main board 2 and metal rotating shaft 3, which are arranged in the structural part 1, of the wireless network card; the metal rotating shaft 3 is connected with a USB interface 4 of the wireless network card; the grounding structure includes a metal dome 5 and an insulating film 6; and
one end of the metal dome 5 is connected with the metal rotating shaft 3, while the other end is coupled to the ground on the main board 2 through the insulating film 6.

Preferably, a coupling connection region of the main board and the metal dome 5 is subjected to copper exposure treatment on the main board 2;
the insulating film 6 is arranged in the copper exposure region on the main board 2; and
an elastic pin is arranged at the other end of the metal dome 5, and the other end contacts with the insulating film 6 through the elastic pin.

Specifically, one end of the metal dome 5 is connected with the metal rotating shaft 3, the metal rotating shaft is shaped into a nearly cylindrical tube or a nearly square tube, a small cylindrical column/small square column is embedded into a large cylindrical column/large square column, the small cylindrical column/small square column is fixed, the large cylindrical column/large square column rotates, and the metal dome 5 is connected with one end of the small cylindrical column/small square column; and the external interface 4 of the wireless network card is connected with the small cylindrical column/small square column through a metal wire.

The other end of the metal dome 5 is coupled to copper in a grounding layer on the main board 2 through the insulating film 6, and when there is a current generated, the grounding copper on the main board forms a capacitive coupling effect with the metal dome 5 to form a new loop, so that an interference loop effect formed by a radio frequency current flowing through the main board may be effectively eliminated, and the problem of poor low-frequency performance of a built-in antenna may be effectively solved.

Preferably, grounding layers are laid on both front and back surfaces of the main board 2, so that the coupling region of the metal dome 5 and the main board 2 may select the front surface or back surface of the main board 2 according to a design layout need of the main board 2.

Preferably, the metal dome 5 is arranged on the structural part 1 in a hot melting manner; and a coupling area of the metal dome 5 and the copper exposure region on the main board 2 may be regulated according to the design layout need of the main board 2, and the low-frequency performance of the built-in antenna is higher if the coupling area is greater.

Preferably, the insulating film 6 may be adhered to the copper exposure region on the main board 2 in an adhesion manner, an area and thickness of the insulating film 6 may be regulated according to the design layout need of the main board 2, but the area of the insulating film 6 is required to be greater than the coupling connection area of the metal dome 5 and the main board 2 to avoid direct contact between the metal dome 5 and the copper exposure region on the main board 2; and moreover, an adhesive for adhering the insulating film 6 may be an insulating adhesive.

Fig. 2 is a schematic diagram of a grounding structure according to a first embodiment of the present disclosure. As shown in Fig. 2, the embodiment is also applied to a rotary wireless network card, wherein the wireless network card includes: a structural part 1, as well as a main board 2 and metal rotating shaft 3, which are arranged in the structural part 1, of the wireless network card; the metal rotating shaft 3 is connected with a USB interface 4 of the wireless network card; the grounding structure includes a metal dome 5 and an insulating film 6; and
one end of the metal dome 5 is connected with the metal rotating shaft 3, while the other end is coupled to the ground on the main board 2 through the insulating film 6.

Preferably, the wireless network card further includes a circuit shielding casing 7 arranged on the main board;
correspondingly, the other end being coupled to the ground on the main board through the insulating film includes: the insulating film 6 is arranged on the circuit shielding casing 7 of the main board 2; and
an elastic pin is arranged at the other end of the metal dome 5, and the other end contacts with the insulating film 6 through the elastic pin.

Specifically, one end of the metal dome 5 is connected with the metal rotating shaft 3, the metal rotating shaft is shaped into a nearly cylindrical tube or a nearly square tube, a small cylindrical column/small square column is embedded into a large cylindrical column/large square column, the small cylindrical column/small square column is fixed, the large cylindrical column/large square column rotates, and the metal dome 5 is connected with one end of the small cylindrical column/small square column; and the external interface 4 of the wireless network card is connected with the small cylindrical column/small square column through a metal wire.

The other end of the metal dome 5 is coupled to the circuit shielding casing 7 of the main board 2 through the insulating film 6, and when there is a current generated, the metal shielding casing 7 and the metal dome 5 form a capacitive coupling effect to form a new loop, so that an interference loop effect formed by a radio frequency current flowing through the main board may be effectively eliminated, and the problem of poor low-frequency performance of a built-in antenna may be effectively solved.

Preferably, the circuit shielding casing of the main board includes a radio frequency circuit shielding casing on the main board.

Preferably, the metal dome 5 is arranged on the structural part 1 in a hot melting manner; and a coupling area of the metal dome 5 and the metal shielding casing 7 on the main board 2 may be regulated according to a design layout need of the main board 2, and the low-frequency performance of the built-in antenna is higher if the coupling area is greater.

Preferably, the insulating film 6 may be adhered to the metal shielding casing 7 of the main board 2 in an adhesion manner, an area and thickness of the insulating film 6 may be regulated according to the design layout need of the main board 2, but the area of the insulating film 6 is required to be greater than the coupling connection area of the metal dome 5 and the metal shielding casing 7 of the main board 2 to avoid direct contact between the metal dome 5 and the metal shielding casing 7 of the main board 2; and moreover, an adhesive for adhering the insulating film 6 may be an insulating adhesive.

### INDUSTRIAL PRACTICABILITY

According to an embodiment of the present disclosure, ground on a main board of a wireless access terminal and a metal dome form a capacitive coupling effect to form a new loop by changing a grounding manner for the main board of the wireless access terminal, so that an interference loop effect formed by a radio frequency current flowing through the main board may be effectively eliminated, the problem of poor low-frequency performance of a built-in antenna is effectively solved, and sensitivity of a low-frequency antenna is improved.

## Claims

1. A rotary wireless access terminal with a grounding structure, **characterized in that** the rotary wireless access terminal comprises: a structural part (1), as well as a main board (2) and metal rotating shaft (3), which are arranged in the structural part (1), of the wireless access terminal; the metal rotating shaft (3) is connected with an external interface (4) of the wireless access terminal; wherein the grounding structure comprises a metal dome (5) and
**characterised in that**
the grounding structure further comprises an insulating film (6), and the wireless access terminal further comprises a circuit shielding casing (7) arranged on the main board (2),
wherein the insulating film (6) is arranged on the circuit shielding casing (7), one end of the metal dome (5) is connected with the metal rotating shaft (3), while the other end of the metal dome (5) is coupled to the circuit shielding casing (7) through the insulating film (6), and wherein the metal dome (5) and the circuit shielding casing (7) form a capacitive coupling effect.

2. The rotary wireless access terminal with a grounding structure according to claim 1 wherein an elastic pin is arranged at other end of the metal dome, and the other end contacts with the insulating film through the elastic pin.

3. The rotary wireless access terminal with a grounding structure according to claim 1, wherein the metal dome (5) is fixed on the structural part (1) in a hot melting manner.

## Patentansprüche

1. Drahtloses Dreh-Zugriffsterminal mit einer Erdungsstruktur, **dadurch gekennzeichnet, dass** das drahtlose Dreh-Zugriffsterminal folgendes umfasst: ein Strukturteil (1) sowie eine Hauptplatine (2) und eine metallische Drehwelle (3), die im Strukturteil (1) des drahtlosen Zugriffsterminals angeordnet sind; wobei die metallische Drehwelle (3) mit einer externen Schnittstelle (4) des drahtlosen Zugriffsterminals verbunden ist; wobei die Erdungsstruktur eine Metallkuppel (5) umfasst;
**dadurch gekennzeichnet, dass** die Erdungsstruktur ferner einen Isolierfilm (6) umfasst und das drahtlose Zugriffsterminal ferner ein auf der Hauptplatine (2) angeordnetes Schaltungsabschirmgehäuse (7) umfasst,
wobei der Isolierfilm (6) auf dem Schaltungsabschirmgehäuse (7) angeordnet ist, ein Ende der Metallkuppel (5) mit der metallischen Drehwelle (3) verbunden ist, während das andere Ende der Metallkuppel (5) durch den Isolierfilm (6) mit dem Schaltungsabschirmgehäuse (7) gekoppelt ist, und wobei die Metallkuppel (5) und das Schaltungsabschirmgehäuse (7) einen kapazitiven Kopplungseffekt bilden.

2. Das drehbare drahtlose Zugriffsterminal mit einer Erdungsstruktur nach Anspruch 1, wobei ein elastischer Stift am anderen Ende der Metallkuppel angeordnet ist und das andere Ende über den elastischen Stift mit dem Isolierfilm in Kontakt steht.

3. Das drehbare drahtlose Zugriffsterminal mit einer Erdungsstruktur nach Anspruch 1, wobei die Metallkuppel (5) auf dem Strukturteil (1) in einer heißschmelzenden Weise befestigt ist.

## Revendications

1. Terminal d'accès sans fil rotatif avec une structure de mise à la terre, **caractérisé en ce que** le terminal d'accès sans fil rotatif comprend : une partie structurelle (1), ainsi qu'une carte principale (2) et un arbre rotatif métallique (3), qui sont disposés dans la partie structurelle (1), du terminal d'accès sans fil ; l'arbre rotatif métallique (3) est connecté à une interface externe (4) du terminal d'accès sans fil ; dans lequel la structure de mise à la terre comprend un dôme métallique (5) et
**caractérisé en ce que** la structure de mise à la terre comprend en outre un film isolant (6), et la le terminal d'accès sans fil comprend en outre un boîtier de blindage de circuit (7) disposé sur la carte principale (2),
dans lequel le film isolant (6) est disposé sur le boîtier de blindage de circuit (7), une extrémité du dôme métallique (5) est reliée à l'arbre rotatif métallique (3), tandis que l'autre extrémité du dôme métallique (5) est couplée au boîtier de blindage de circuit (7) par l'intermédiaire du film isolant (6), et dans lequel le dôme métallique (5) et le boîtier de blindage de circuit (7) forment un effet de couplage capacitif.

2. Terminal d'accès sans fil rotatif avec une structure de mise à la terre selon la revendication 1, dans lequel une broche élastique est disposée à l'autre extrémité du dôme métallique, et l'autre extrémité est en contact avec le film isolant par l'intermédiaire de la broche élastique.

3. Terminal d'accès sans fil rotatif avec une structure de mise à la terre selon la revendication 1, dans lequel le dôme métallique (5) est fixé sur la partie structurelle (1) par fusion à chaud.
